# EUROPEAN PATENT APPLICATION

(11) **EP 2 582 199 A1**
(43) Date of publication of application: **17.04.2013**
(21) Application number: 11791828.4
(22) Date of filing: 24.01.2011
(51) Int. Cl.: H04W 88/18, H04L 29/06

(54) **M2M SYSTEM AND METHOD FOR PROCESSING SERVICES THEREOF**

(30) Priority: 09.06.2010 CN 201010204920
(71) Applicant: ZTE Corporation, Shenzhen, Guangdong 518057 (CN)
(72) Inventor: FENG, Yuxiang, Shenzhen, Guangdong 518057 (CN)
(74) Representative: Vossius & Partner
(86) International application number: PCT/CN2011/070536
(87) International publication number: WO 2011/153836

(57) **Abstract**

The present invention discloses a Machine-to-Machine (M2M) system and a service processing method thereof. The method for processing service in the M2M system comprises the step of: during a process of service processing, when a first M2M platform in the M2M system detects that the traffic of a first application meets predetermined conditions, the first M2M platform shunts the traffic to a second application to be processed, wherein the first application and the second application are bound with each other. Through the present invention, the loss of messages in an M2M system can be reduced.

## Description

### Field of the Invention

The present invention relates to the field of communications, and in particular to a Machine-to-Machine (M2M) system and a method for processing service in an M2M system.

### Background of the Invention

Machine-to-Machine/Man (M2M) is a networked application and service centered in intelligent interaction of machine terminals. By embedding a wireless communication module into a machine, and using access means such as wireless communication, M2M provides a comprehensive informatization solution for customers, in order to meet the informatization demand of customers on aspects, such as monitoring, scheduling, data acquisition and measurement.

An M2M terminal is one comply with a certain protocol (for example, a china mobile M2M terminal is based on WMMP protocol, while a china telecom M2M terminal supports MDMP Protocol) and having a certain function (for example, reception of an activation instruction from a remote M2M platform, local fault alarm, data communication, remote upgrade, data statistics, and end-to-end communication interaction function).

An M2M platform is a system that provides uniform M2M terminal access management, terminal equipment authentication and detection control for M2M application service clients and that can forward corresponding service data. An M2M application service platform is an application system that provides various M2M application services for M2M application service clients to achieve service local processing for specific sectors.

Internet of Things is very similar to internet, both of which require interconnection and communication of numerous equipment, except that the destination of Internet of Things is much larger, requiring interconnection of all terminal equipment.

In the existing M2M protocols, the operator generally requires achievement of a M2M platform. All M2M applications and under-layer terminals have to be registered onto the platform. Communication between M2M applications and under-layer terminals and communication between under-layer terminals have to be forwarded through the M2M platform.

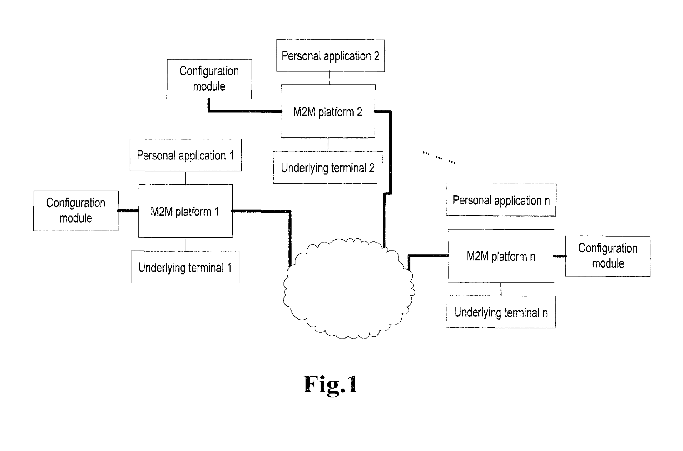

Fig. 1 is a schematic of an M2M system according to the conventional art.

As show in Fig. 1, in an M2M system, each of M2M platforms is independent from each other when processing a service, so that a large number of messages are lost when the application server of a certain M2M platform has a peak value.

Because the underlying equipment managed by the M2M have own particularity: many types of equipment, huge number, and various communication ways between equipment and the platform, a case may be caused: the information processing load of the M2M platform is very huge. In certain particular cases, message traffic sent to a single application by terminals may have a huge peak value. The message processing capacity of the single application may be unable to meet the performance requirements of message processing.

In this case, a large amount of data streams sent by terminals will propose quite high requirements on the processing capacity of the M2M platform and the upper-layer applications. How to better utilize the existing resources to meet the processing requirements of burst traffic becomes a problem which the operator needs to solve.

The inventor finds that the loss of messages in the M2M system in the conventional art described above is serious.

### Summary of the Invention

The main purpose of the present invention is to provide an M2M system and a service processing method thereof, so as to at least solve the problem of serious loss of messages in the M2M system described above.

According to one aspect of the present invention, a method for processing service in an M2M system is provided, the method comprises: during the service processing, when a first M2M platform in the M2M system detects that the traffic of a first application meets predetermined conditions, the traffic is shunted to a second application to be processed, wherein the first application and the second application are bound with each other.

Preferably, each of applications in the M2M system is configured with a different priority, the step of the first M2M platform shunts the traffic to a second application to be processed comprises: the first M2M platform selects an application with a highest priority among the applications as the second application; the first M2M platform shunts the traffic to the second application to be processed.

Preferably, each of applications in the M2M system is configured with a different priority according to the type of a terminal, wherein the type comprises at least one of the following types: the type of terminal, the type of message, the type of data in message, and the length of message.

Preferably, before the first M2M platform shunts the traffic to an application to be processed, the method further comprises: determining which applications in the M2M system can be bound, wherein, which applications in the M2M system can be bound is determined according to one or combinations of any more of the following ways: whether the applications have the same message logic processing capacity; whether the applications have the same function; and whether the applications are able to perform cooperative processing for received message data.

Preferably, the step of the first M2M platform detects that the traffic of a first application meets predetermined conditions comprises one of the following: the first M2M platform detects that the traffic of the first application exceeds a preset license limit; the first M2M platform detects that the traffic of the first application exceeds the traffic threshold of an application server where the first application is located; a server where the first application is located finds that its processing capacity is insufficient, and requests the first M2M platform to perform traffic control.

Preferably, the step of the first M2M platform shunts the traffic to a second application to be processed comprises one of the following: the first M2M platform shunts the traffic from a first application server to a second application server, wherein both the first application server and the second application server are connected with the first M2M platform, the first application and the second application are applications on the first application server and the second application server, respectively; the first M2M platform shunts the traffic from a third application server to a fourth application server via a second M2M platform, wherein the third application server is connected with the first M2M platform, the fourth application server is connected with the second M2M platform, the first application and the second application are applications on the third application server and the fourth application server, respectively.

Preferably the step of the first M2M platform shunts the traffic to a second application to be processed comprises: the first M2M platform reduces traffic sent to the first application; the method further comprises: in a case that the first M2M platform detects that the service processing capability of the first application is recovered, increasing traffic sent to the first application.

According to another aspect of the present invention, an M2M system is provided, the M2M system comprises: one or more M2M platforms, when a first M2M platform detects that the traffic of a first application meets predetermined conditions, the first M2M platform shunts the traffic to a second application to be processed, wherein the first application and the second application are bound with each other.

Preferably, the first M2M platform corresponds to a plurality of applications and each of the applications has a different priority, wherein the first M2M platform shunts the traffic according to the order of the priority.

Preferably, the second application is an application on the second M2M platform or an application on the first M2M platform.

In the present invention, during the service processing, when a first M2M platform in the M2M system detects that the traffic of a first application meets predetermined conditions, the traffic is shunted to a second application to be processed, wherein the first application and the second application are bound with each other, the problem of serious loss of messages in the M2M system is solved, further the effect of reducing the loss of messages in the M2M system is achieved.

### Brief Description of the Drawings

Drawings, provided for further understanding of the present invention and forming a part of the specification, are used to explain the present invention together with embodiments of the present invention rather than to limit the present invention, wherein :
Fig. 1 is a network schematic of an M2M system according to the conventional art;
Fig. 2 is a network schematic of an M2M system according to the embodiments of the present invention;
Fig. 3 is a flowchart of a method for processing service in an M2M system according to the embodiments of the present invention;
Fig. 4 is a working flowchart illustrating an M2M platform shunts messages sent by terminals according to the embodiments of the present invention;
Fig. 5 is a working flowchart illustrating an M2M platform processes messages forwarded by other M2M platforms according to the embodiments of the present invention; and
Fig. 6 is a working flowchart illustrating an M2M platform recovers the message traffic sent to an application according to the embodiments of the present invention;

### Detailed Description of the Embodiments

The preferred embodiments are described in conjunction with the drawings as follows. It shall be understood that the preferred embodiments described herein are only used to describe and explain the present invention and shall not be construed as improper limitations on the same. The embodiments of the present application and the features of the embodiments can be combined with each other if there is no conflict.

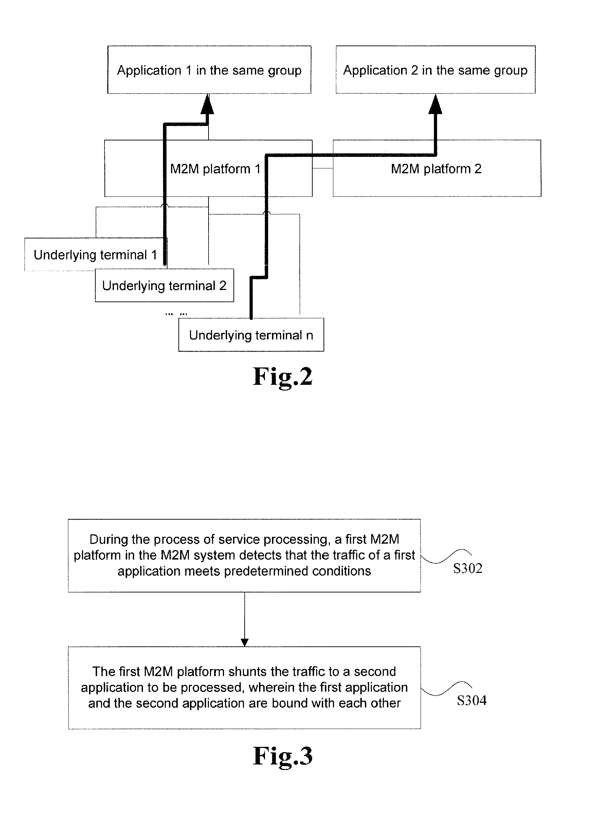

Fig. 2 is a network schematic of an M2M system according to the embodiments of the present invention.

As shown in Fig. 2, the M2M system according to the embodiments of the present invention comprises a plurality of M2M platforms and applications of each of the plurality of M2M platforms are bound with each other, wherein when a first M2M platform in the plurality of M2M platforms detects that the traffic exceeds the processing capacity of a first application server where the application is located, the first M2M platform shunts the traffic to an application server, to which a second M2M platform in the M2M system is connected, to be processed, wherein there may also be a plurality of applications of the same type or applications that can be shunted on a same application server, in this case, the first M2M platform may shunt the traffic of a first application of a certain application server to a second application of the application server.

Through the M2M system, in a case that the application server to which one M2M platform in the system is connected is out of service processing capacity, the traffic is shunted to the application servers to which other platforms are connected to be processed, or, the traffic of a certain application is shunted to other applications to be processed, which can effectively solve the problem of serious loss of messages (for example, request messages sent to applications by M2M platforms, response messages fed by applications and the like) in the M2M system.

Preferably, each of a plurality of M2M platforms has a different priority, wherein each M2M platform shunts the traffic according to the order of priority. By shunting the traffic according to the order of the preset priority, each M2M platform can shunt the traffic according to the priority during the process of the shunting, so that important messages are hard to lose, further the problem of serious loss of packets is solved better.

Fig. 3 is a flowchart of a method for processing service in an M2M system according to the embodiments of the present invention.

As shown in Fig. 3, the method for processing service in the M2M system comprises the steps of:
S302: During service processing, a first M2M platform in the M2M system detects that the traffic of a first application meets predetermined conditions.
S304: The first M2M platform shunts the traffic to a second application to be processed, wherein the first application and the second application are bound with each other.
S302 will be described in details below.

For example, the M2M platform may provide a configuration module. Different application providers may perform configuration on the configuration module, wherein the configuration contents may include:
Configure substitute applications for a certain application registered onto the M2M platform, and a plurality of substitute applications can be set.. The substitute applications are the applications already registered onto other M2M platforms. Under the situation that there is a plurality of substitute applications, it is also necessary to set substitute priorities for these substitute applications.
Configure which types of terminal messages need shunting for traffic protection. The types include: type of terminals, type of messages, type of data in message bodies, length of messages and the like. For example, if two terminals having different types from each other (antitheft alarm terminal and ammeter reading sending terminal) send messages to the M2M platform simultaneously, the application server propose requirement for traffic control on both messages. If it is necessary to ensure successful alarm preferentially, then shunting protection is required for messages from the antitheft alarm terminal only according to the configured types of the terminals, in this case, messages from the antitheft alarm terminal are shunted, while messages from the ammeter reading sending terminal are dropped.
Configure the priority of a message during shunting protection according to the different types of terminals. Types include: type of terminals, type of messages, type of data in message bodies, length of messages and the like. For example, if two terminals having different types from each other (antitheft alarm terminal and ammeter reading sending terminal) send messages to the M2M platform simultaneously, the application server propose requirements of traffic control on both messages. If it is necessary to ensure successful alarm preferentially, then the priority of the antitheft alarm terminal is higher than that of the ammeter reading sending terminal according to the configured types of the terminals. In this case, messages from the antitheft alarm terminal will be shunted first, then the M2M continues to shunt messages from the ammeter reading sending terminal after ensuring that messages from the antitheft alarm terminal are shunted successfully. If the M2M platform has no time to perform shunting, it will first choose to drop messages from the ammeter reading sending terminal.

The traffic granularity of the message can be adjusted each time during the traffic shunting.

Wherein, during the process of configuring substitute applications for applications themselves, these multiple applications registered in one large system consisting of a plurality of M2M platforms are commonly bound to form a group of applications. Which applications can be bound depends on the application provider. The reference basis comprises: whether these applications have the same message logical processing capacity; whether these applications have the same function (for example, the an M2M platform in Beijing and an M2M in Chongqing, both of which belong to the Electric Power Authority, registered an application of obtaining the ammeter reading to respectively obtain the local ammeter reading; the procedures of obtaining the ammeter reading for both applications are completely the same); whether these applications are able to perform cooperative processing for received message data.

The step of the first M2M platform detects that the traffic of a first application meets predetermined conditions comprises one of the following:
the first M2M platform detects that the traffic of the first application exceeds a preset license limit, wherein the traffic of each application may be set with one license limit, in a case that the traffic of a certain application exceeds the set license limit, thus the predetermined conditions are met, and shunting is required;
the first M2M platform detects that the traffic of the first application exceeds the traffic threshold of the application server where the first application is located, wherein the application server where each application is located may be set with a traffic threshold, in a case that the traffic of a certain application server exceeds the traffic threshold, thus the predetermined conditions are met, and shunting is required; and
the application server where the first application is located finds that its processing capacity is insufficient, and requests the first M2M platform to perform traffic control.
S304 will be described in details below.

In the embodiment, as the first M2M platform shunts the traffic to the application server to which the second M2M platform is connected to be processed when the first application server to which the first M2M platform is connected is out of traffic processing capacity, the first M2M platform will not drop the messages that are out of its processing capacity, further the loss of messages can be reduced.

Preferably, each M2M platform in the M2M system is configured with a different priority, the step of the first M2M platform shunts the traffic to a second application to be processed comprises: the first M2M platform selects an application with the highest priority among the applications as the second application; the first M2M platform shunts the traffic to the second application to be processed.

After the first M2M platform shunts the traffic to the second M2M platform to be processed, the method further comprises: the second M2M platform judges whether the traffic is beyond the authentication limit of the second application server managed by the second M2M platform, wherein the first application server and the second application server are application servers of the same type; in a case that the judgment result is YES, the second M2M platform shunts the traffic to an M2M platform with a next priority to be processed; in a case that the judgment result is NO, the second M2M platform processes the traffic.

The first M2M platform in the M2M system may detect that the traffic exceeds the processing capacity of the first application server through one of the following ways: the first M2M platform receives a traffic request message from the first application server, wherein the traffic request message is used for requesting for shunting of the traffic; the first M2M platform detects that the traffic sent to the first application server exceeds the authentication limit of the first application server.

The step of the first M2M platform shunts the traffic to the second M2M platform in the M2M system to be processed comprises: the first M2M platform reduces traffic sent to the first application server.

The method further comprises: in a case that the first M2M platform detects that the service processing capability of the application server is recovered, it increases traffic sent to the first application server.

By modifying the specific implementation flow of the M2M system, the upper-layer application is combined, so that the M2M is responsible for shunting and transferring the redundant traffic to applications of the same group on other M2M platforms when the traffic has a peak value.

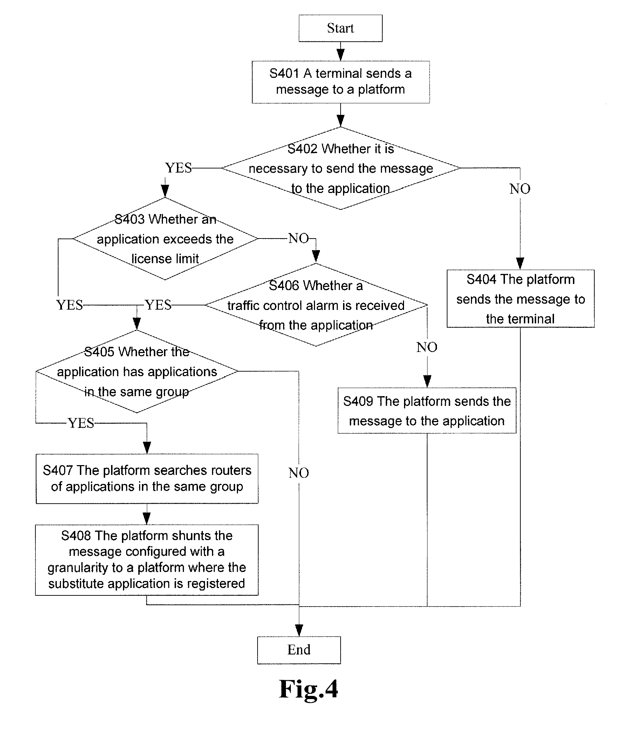

Fig. 4 is a working flowchart illustrating an M2M platform shunts messages sent by terminals according to the embodiments of the present invention.

As shown in Fig. 4, the shunting process comprises the steps of:
S401: A terminal sends a message to an M2M platform.
S402: The M2M platform judges whether it is necessary to send the message to an application. In a case that the judgment result is YES, S403 is executed, in a case that the judgment result is NO, S404 is executed.
S403: Determine whether the application of the M2M platform exceeds the license limit. In a case that the judgment result is YES, S405 is executed, in a case that the judgment result is NO, S406 is executed.
S404: The M2M platform sends a message to the terminal.
5405: The M2M platform judges whether the application of the M2M platform has applications in the same group. In a case that the judgment result is YES, S407 is executed, in a case that the judgment result is NO, S410 is executed.
S406: The M2M platform judges whether a traffic control alarm is received from the application. In a case that the judgment result is YES, S405 is executed, in a case that the judgment result is NO, S409 is executed.
S407: The M2M platform searches routers of applications in the same group.
S408: The M2M platform shunts message configured with a granularity to a platform where the substitute application is registered.
S409: The M2M platform sends the message to the application.
S410: The flow ends.

With the development of M2M platforms, a many-to-many relation may occur between terminals and upper-layer applications. That is, one terminal may be registered onto a plurality of applications at the same time and provide the collected data to applications.

In a case that M2M platforms are in good interconnection and communication, a same application provider may register own applications on a plurality of M2M platforms; or, different application providers have own applications registered onto different M2M platforms, but the function of each application is similar. In this case, in allusion to how to increase the service processing capability of applications, the present invention proposes the following solution:
During service processing, if the current traffic exceeds the processing capability of a certain application, then the application may send a message to the M2M platform to notify the M2M platform to perform traffic control for it.
During service processing, when the M2M platform forwards a terminal message to the application, it checks whether traffic sent to the application exceeds the license limit of application first, and then checks whether a traffic control request is received from the application.

If any one of the two checks is failed, the M2M platform checks whether shunting protection needs to be started for the message according to information, such as the type of the message. If so, it finds whether the application has applications in the same group. If available, it finds one substitute application from applications in the same group.

During shunting, the M2M platform gradually reduces message traffic sent to the application, and the reduction speed depends on the speed configured on the configuration module. The sending process may be as follows:
the M2M platform first checks whether the message body of the forwarded message has the identifier of a destination application. If not, it adds the identifier of the destination application in the header; if available, it modifies the identifier of the destination application to which the message is forwarded as the identifier of the substitute application.

The M2M platform forwards the message to the M2M platform to which the substitute application belongs, wherein the information (the information includes the identifier of the substitute application and the respective substitute priority) about the substitute application is carried in the forwarded message.

The M2M platform to which the substitute application belongs executes the two checks described above first after receiving the message forwarded by other M2M platforms.

If any one of the two checks mentioned in the above step is failed, the M2M platform continues to forward the message to the M2M platform to which the substitute application with the next priority belongs. The destination M2M platform will shunt after receiving the message. If the two checks mentioned in the above step are successful, the M2M platform sends the message to the application. The flow ends.

If any one of the two checks mentioned above is failed after the M2M platform to which the substitute application belongs receives the message forwarded from other M2M platforms, and the M2M platform is the one to which the last substitute application belongs, the M2M platform drops the message.

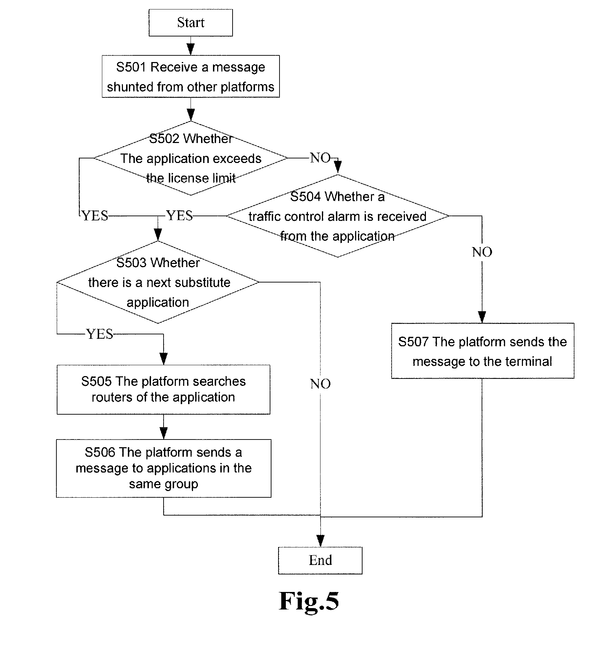

Fig. 5 is a working flowchart illustrating an M2M platform processes messages forwarded by other M2M platforms according to the embodiments of the present invention.

As shown in Fig. 5, the step of the M2M platform processes the message forwarded by other M2M platforms may comprises the steps of:
S501: The M2M platform receives a message shunted from other platforms.
S502: The M2M platform judges whether the application of the M2M platform exceeds the license limit. In a case that the judgment result is YES, S503 is executed, in a case that the judgment result is NO, S504 is executed.
S503: The M2M platform judges whether there is a next substitute application. In a case that the judgment result is YES, S505 is executed, in a case that the judgment result is NO, S508 is executed.
S504: The M2M platform judges whether a traffic control alarm is received from the application.
S505: The M2M platform searches the router of the next substitute application.
S506: The M2M platform sends the message to the next substitute application in the same group.
S507: The M2M sends the message to the application connected.
S508: The flow ends.

After a period of time, the service processing capability of the original first application is recovered, and the service will send a message to the M2M platform to which it belongs to notify the M2M platform that the processing capability of the first application is recovered. Or, after a period of time, the M2M platform found that the message traffic sent to the first application falls down to the degree less than the license limit of the M2M platform. The M2M platform will gradually reduce uplink message traffic sent to other substitute M2M platforms, and gradually increase message traffic sent to the first application. The whole process of modifying the sending path is a gradual process. The message traffic granularity increased each time is the traffic granularity configured on the configuration module of the M2M platform. Finally, all message uplink traffics are sent to the first application.

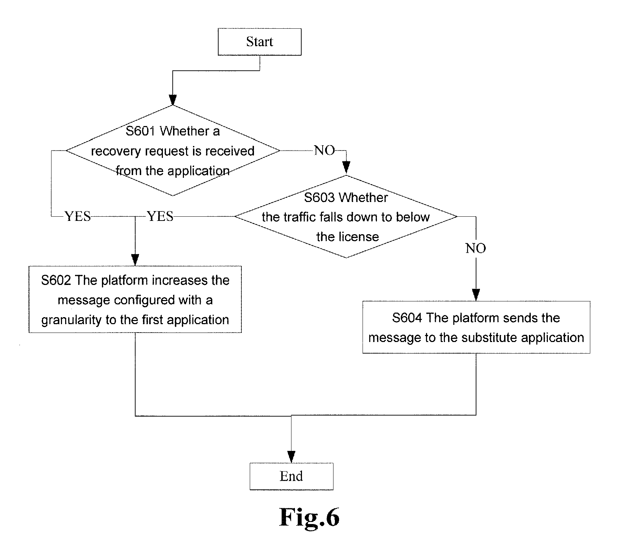

Fig. 6 is a working flowchart illustrating an M2M platform recovers the message traffic sent to the application according to the embodiments of the present invention.

S601: The M2M platform judges whether a recovery request of the application is received. In a case that the judgment result is YES, S602 is executed, in a case that the judgment result is NO, S603 is executed.

S602: The M2M platform increases the message configured with a granularity to the first application.

S603: The M2M platform judges whether the traffic falls down to below the license limit. In a case that the judgment result is YES, S602 is executed, in a case that the judgment result is NO, S604 is executed.

S604: The M2M platform sends the message to the substitute application.

S605: The flow ends.

After all uplink messages are processed, according to actual situations, corresponding subsequent processing may be done:
If the type of the message is document download type, that is, the substitute application has completed all processing functions of the first application, no subsequent processing is done; if the type of the message is alarm type, that is, the substitute application cannot complete all processing functions of the first application, the subsequent first application initiates a request to other applications to ask other applications to feed back data of the original message; or, other applications actively uploads data of the received original message to the first application and finally gather data of the original message or intermediate processing result to the original first application.

Description will be given by taking the service provider of the electric power system as the application service provider.

It is assumed that, the service provider of the electric power system needs to establish a subscription relation with terminals registered onto a plurality of M2M platforms (for example, in a case that one area has one M2M platform, the service provider of the electric power system needs to collect reading of ammeters in a plurality of areas), the application service provider needs to register different applications on a plurality of M2M platforms (for example, the service provider of the electric power system registers applications for collecting ammeter reading on the M2M platforms in a plurality of areas).

In this case, a plurality of types of applications provided by the application service provider may be bound together to form a group of applications. The application service provider may perform operation on the configuration module of an M2M platform A in a certain area to make the following configuration:
Configure applications App2, App3, App4 and the like registered on the M2M platforms in other areas to collect ammeter reading as substitute applications of an application App1 registered on the M2M platform A in the local area to collect ammeter reading. The M2M platforms to which applications App2, App3, App4 and the like registered are saved with router information of the registered applications.
Configure the message where the type of the terminal is an ammeter reading collector and the type of the message is ammeter reading report as one needs shunting protection.

In a certain case, on the M2M platform A, the uplink traffic of the terminal has a peak value (for example, the ammeter reading sending terminals of the electric power system are set with a timing to send ammeter reading to the application intensively in a certain time period). The corresponding application App1 registered on the M2M platform A has an insufficient processing capability for such a large amount of messages.

In this case, the application App1 sends an instruction to the M2M platform A to notify the M2M platform A that the processing capability of the application App1 is insufficient and ask the M2M platform to do overflow processing to shunt the uplink service data of the terminal. The M2M platform A searches own substitute list, sends the subsequent messages to application App2 on the M2M platform B with a second priority. The forwarded message carries information about the substitute application (the information includes the identifier of the substitute application and the respective substitute priority).

After receiving the message, the M2M platform B first checks whether App2 is insufficient in processing capability. If it does not find that the App2 sends an instruction indicating insufficient processing capability, the M2M platform B sends the message to the App2. App2 processes the message. If App2 is also insufficient in processing capability, the M2M platform B searches a next substitute application and forwards the message to the application.

In this way, all ammeter reading data is not lost for the service application provider of the electric power system, the rest thing is just to exchange data between a plurality of applications (for example, App1 and App2).

If the processing capability of App1 is recovered and it can process new terminal data after a period of time, App1 sends an instruction to the M2M platform A to notify the M2M platform A that the processing capability of App1 is recovered. As the manager of the M2M platform A has configured the granularity of traffic smooth recovery as P pieces/minute, for the subsequent uplink messages, the M2M platform A will gradually increase the traffic sent to App1 by P pieces of messages per minute. It will continue to forward other rest messages to App2, until all traffics are recovered to be sent to application App1.

After all uplink messages are processed, as all the applications belong to the service application provider of the electric power system, all App1s send a request message to App2, App3, App4 and the like. After receiving the request message, App2, App3, App4 and the like synchronize the received ammeter reading data to App1.

The above description is aimed at a case that the service processing capability of the application is insufficient. For a case that it is unable to send the uplink message of the terminal to the application due to insufficient license allocated to the application by the M2M, the specific flow is similar to the above description and will not be described again here.

It can be seen from the above description that, through the present invention, the following effects can be achieved conveniently: when an application is in failure, in order to ensure the normal use of service functions, a substitute application is provided to play the function of the application to ensure the normal processing of services without interruption. After the application is recovered, the services are switched to the normal application. Simultaneously, the reliability of applications also can be greatly improved.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. are all included in the scope of the protection of the present invention.

## Claims

1. A method for processing service in a Machine-to-Machine (M2M) system, **characterized by** comprising:
during a process of service processing, when a first M2M platform in the M2M system detects that traffic of a first application meets predetermined conditions, the first M2M platform shunting the traffic to a second application to be processed, wherein the first application and the second application are bound with each other.

2. The method according to claim 1, **characterized in that** each of applications in the M2M system is configured with a different priority, the step of the first M2M platform shunting the traffic to a second application to be processed comprises:
the first M2M platform selecting an application with a highest priority among the applications as the second application; and
the first M2M platform shunting the traffic to the second application to be processed.

3. The method according to claim 2, **characterized in that** each of applications in the M2M system is configured with a different priority according to the type of a terminal, wherein the type comprises at least one of the following types:
a type of terminal, a type of message, a type of data in message body, and a length of message.

4. The method according to claim 1, **characterized in that**, before the first M2M platform shunting the traffic to the second application to be processed, the method further comprises: determining which applications in the M2M system can be bound, wherein the applications in the M2M system can be bound is determined according to at least one of the following ways:
whether the applications have the same message logic processing capacity;
whether the applications have the same function; and
whether the applications are able to perform cooperative processing for received message data.

5. The method according to any one of claims 1 to 4, **characterized in that** the step of the first M2M platform detects that the traffic of a first application meets predetermined conditions comprises one of the following:
the first M2M platform detecting that the traffic of the first application exceeds a preset license limit;
the first M2M platform detecting that the traffic of the first application exceeds the traffic threshold of an application server where the first application is located; and
the application server where the first application is located finding that processing capacity of the application server is insufficient, and requesting the first M2M platform to perform traffic control.

6. The method according to any one of claims 1 to 4, **characterized in that** the step of the first M2M platform shunting the traffic to a second application to be processed comprises at least one of the following:
the first M2M platform shunting the traffic from a first application server to a second application server, wherein both the first application server and the second application server are connected with the first M2M platform, and the first application and the second application are applications on the first application server and the second application server, respectively; and
the first M2M platform shunting the traffic from a third application server to a fourth application server via a second M2M platform, wherein the third application server is connected with the first M2M platform, the fourth application server is connected with the second M2M platform, and the first application and the second application are applications on the third application server and the fourth application server, respectively.

7. The method according to claim 1, **characterized in that** the step of the first M2M platform shunting the traffic to a second application to be processed comprises:
the first M2M platform reducing the traffic sent to the first application; and
the method further comprises:
in a case that the first M2M platform detects that the service processing capability of the first application is recovered, increasing the traffic sent to the first application.

8. A Machine-to-Machine (M2M) system, the system comprises one or more M2M platforms, **characterized in that**, when a first M2M platform detects that the traffic of a first application meets predetermined conditions, the first M2M platform shunts the traffic to a second application to be processed, wherein the first application and the second application are bound with each other.

9. The M2M system according to claim 8, **characterized in that** the first M2M platform corresponds to a plurality of applications and each of the applications has a different priority, wherein the first M2M platform shunts the traffic according to the order of the priority.

10. The M2M system according to claim 8, **characterized in that** the second application is an application on the second M2M platform or an application on the first M2M platform.
